# FASCICULE DE BREVET EUROPEEN

(11) **EP 2 632 706 B1**
(45) Date de publication et mention de la délivrance du brevet: **15.04.2015**
(21) Numéro de dépôt: 11788761.2
(22) Date de dépôt: 21.10.2011
(51) Int. Cl.: B31D 5/00

(54) **MACHINE DE GONFLAGE REMPLISSAGE AUTOMATIQUE DE COUSSIN DE GAZ, NOTAMMENT D'AIR, POUR EMBALLAGE, ET SON UTILISATION POUR GONFLER ET REMPLIR DES COUSSINS**
MASCHINE ZUM AUTOMATISCHEN FÜLLEN/AUFBLASEN VON GASKISSEN, INSBESONDERE LUFTKISSEN, ZUM VERPACKEN UND VERWENDUNG ZUM FÜLLEN UND AUFBLASEN VON KISSEN
MACHINE FOR AUTOMATICALLY FILLING-INFLATING GAS CUSHIONS, NOTABLY AIR CUSHIONS, FOR PACKAGING AND USE THEREOF FOR FILLING AND INFLATING CUSHIONS

(30) Priorité: 25.10.2010 CH 17572010
(43) Date de publication de la demande: 04.09.2013
(73) Titulaire: Borgeat, Guy, 1896 Vouvry (CH)
(72) Inventeur: FLUECKIGER, Glenn, 1950 Sion (CH)
(74) Mandataire: Meissner, Bolte & Partner GbR
(86) Numéro de dépôt international: PCT/CH2011/000253
(87) Numéro de publication internationale: WO 2012/055053

(56) Documents cités:
- WO-A1-95/35246

## Description

La présente invention a pour objet une machine de gonflage / remplissage automatique de coussin de gaz, notamment d'air, pour emballage, et son utilisation pour gonfler et remplir des coussins. Notamment pour protéger des objets délicats et fragiles contre les chocs.

Actuellement les objets délicats et fragiles sont emballés dans des cartons contenant des particules de polystyrène expansé ou des coques de polystyrène expansé ou autres matériaux. Ces produits génèrent un important volume de déchets qui doivent être détruits après usage. Des coussins remplis d'air sont aussi utilisées pour le calage d'objets dans les cartons en remplacement de particules de polystyrène. Toutefois les coussins servant aux calages ne protègent pas suffisamment lesdits objets contre les chocs. Alors il a été inventé des coussins d'air permettant d'entourer lesdits objets dans un ou plusieurs coussins d'air. Ces derniers coussins comportent au moins une valve permettant un gonflage adapté, c'est-à-dire un gonflage de pression supérieure à ceux précédemment réalisé pour le calage. Le document EP 0553027 décrit un coussin gonflable du genre définit ci-dessus. Une machine de gonflage de coussins d'air est décrite dans le document WO 95/35246.

Les coussins gonflables avec valves présentent plusieurs inconvénients, notamment la valve comporte le risque de fuites et de faire diminuer la pression dans le ou lesdits coussins, de plus le gonflage manuel prends du temps.

L'invention a pour buts de fournir une machine de gonflage et remplissage automatique de coussins, notamment d'air, pour emballage, et son utilisation pour gonfler et remplir des coussins, c'est-à-dire un procédé qui ne demande aucune intervention humaine, et qui ne présente pas les inconvénients des procédés connus.

Ces buts sont atteints avec la machine de gonflage et remplissage automatique de coussins de gaz, notamment d'air, pour emballage, selon l'invention définie à revendications 1, et son utilisation définie à la revendication 4.

L'invention sera mieux comprise ses caractéristiques et ses avantages apparaîtront plus clairement à la lecture de la description détaillée de formes d'exécution, données uniquement à titre d'exemple et faite en référence aux dessins annexés, sur lesquels:
La figure 1 représente une forme d'exécution des mâchoires d'une machine selon l'invention.
La figure 2 représente les mâchoires de la figure 1 serrant les parois, film plasique, d'un coussin non gonflé.
La figure 3 représente les mâchoires de la figure 1 lors du perçage des parois.
La figure 4 représente les mâchoires de la figure 1 écartées au moment au moment d'un premier jet d'air servant à décoller les deux parois de film plastique.
La figure 5 représente les mâchoires de la figure 1 écartées, permettant le gonflage du coussin.
La figure 6 représente les mâchoires de la figure 1 écartées lau moment du gonflage du coussin.
La figure 7 représente les mâchoires de la figure 1 serrant les parois du coussin gonflé.
La figure 8 représente les mâchoires de la figure 1 au moment du thermosoudage des parois.
La figure 9 représente les mâchoires de la figure 1 écartées au moment de la libération de la machine du coussin.
La figure 10 représente sur un coussin un espace circulaire définit par une soudure discontinue.
La $ représente une protubérance relativement à une forme particulière d'un coussin.

Dans l'ensemble des figures il sera utilisé les mêmes signes de référence pour désigner les mêmes caractéristiques.

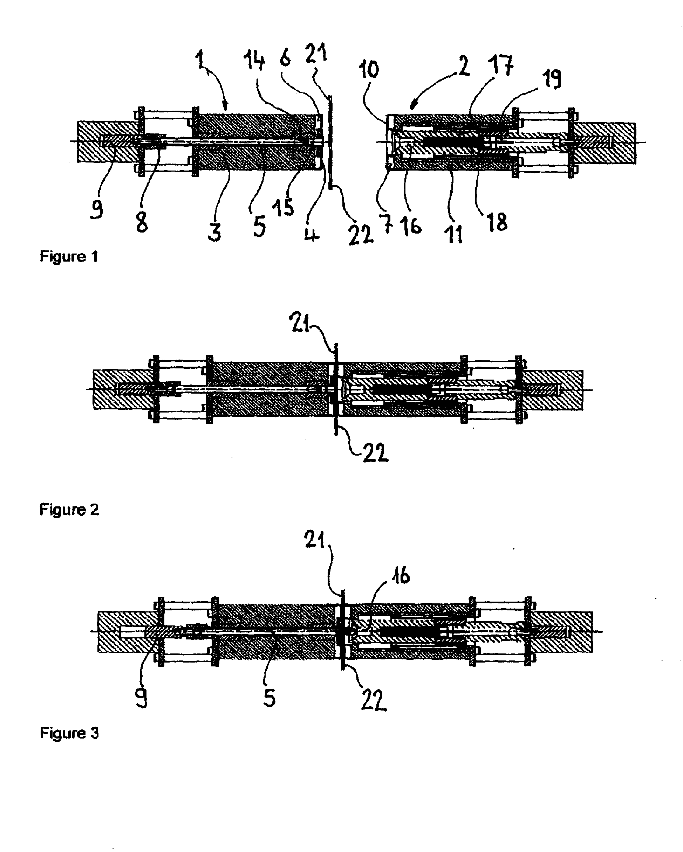

En référence aux figures 1 à 9, il n'a été représenté que les mâchoires d'une machine, selon une forme d'exécution de la présente invention, pour le gonflage et le remplissage de coussin d'air, car tous les autres éléments de la machine sont connus et à la portée de l'homme du métier. Il a aussi été considéré que les deux parois d'un coussin sont constituées par deux feuilles de film plastique.

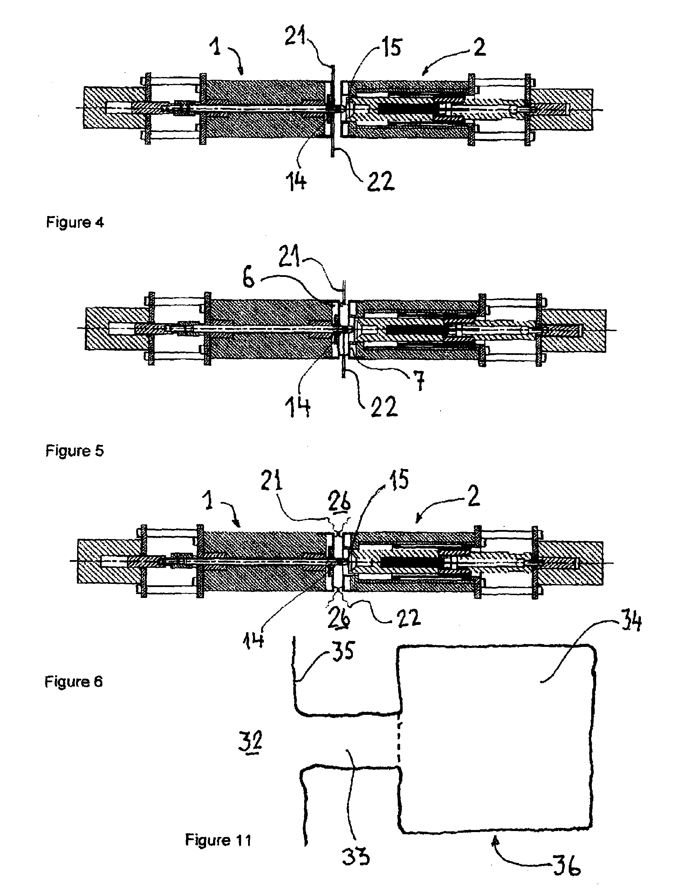

Comme il est visible sur la figure 1 les deux mâchoires 1 et 2 sont montées sur le bâti, non représenté, d'une machine selon la présente invention. La mâchoire 1, montée mobile sur le bâti de la machine, est constituée par un cylindre 3, à l'intérieure duquel est disposé une aiguille creuse 5 mobile dans le sens de la l'axe du cylindre 3. Le déplacement de ladite aiguille 5 est assuré, dans le cas représenté, par un piston 9, mais pourrait aussi être assuré par un électroaimant ou tout autre moyen. Entre l'aiguille 5 et le piston 9 est prévu un tuyau souple 8 apportant de l'air sous pression à l'intérieure de l'aiguille 5. L'extrémité distale de l'aiguille présente une pointe 15, dont la sortie d'air est obstruée, tandis qu'en arrière de la pointe 15 l'aiguille comporte par deux (ou un nombre différent) ouvertures latérales 14, destinées à introduire l'air dans le coussin (voir figure 5). La mâchoire 2 est constituée par un cylindre 11 maintenu mobile sur le bâti, non représenté. Les cylindres 3 et 11 peuvent se déplacer longitudinalement de manière à ce que leurs faces terminales 4 et 10 puissent venir en contact (voir figure 2). Le cylindre 11 contient une pièce cylindrique 17 concentrique au cylindre 11. À l'intérieure de ladite pièce 17 est disposé un corps chauffant électrique 18 alimenté par un câble électrique 19. À son extrémité proche du cylindre 3 le cylindre 11 présente une creusure 16 destinée à recevoir la pointe 15 de l'aiguille 5. Les deux extrémités des cylindres 3 et 11 face à face présentent une couronne d'ouvertures en communication avec un dispositif d'aspiration /succion par respectivement des canaux d'aspiration 6 et 7 disposés dans les cylindres 3 et 11.

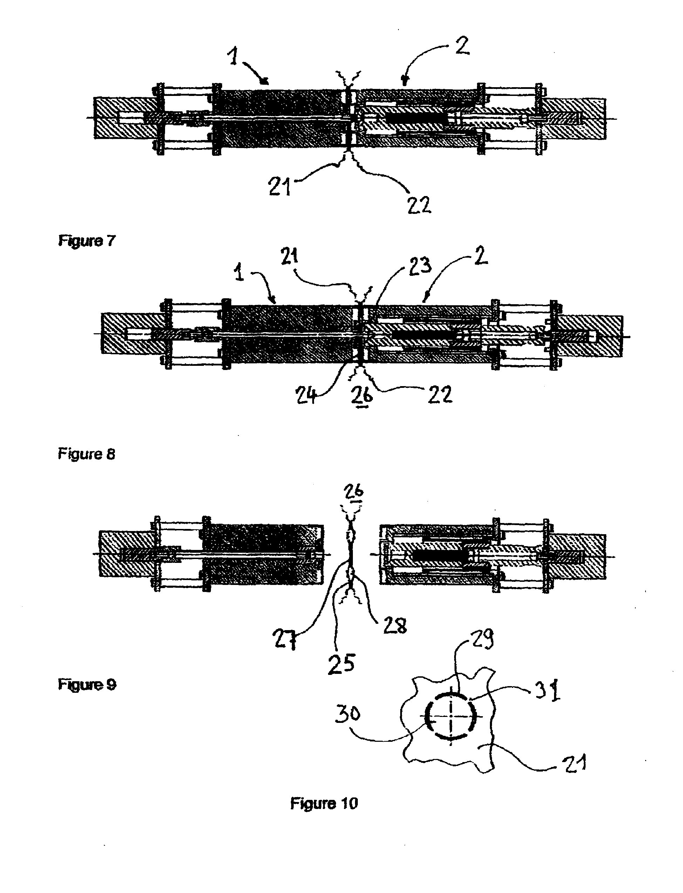

Une utilisation d'une machine selon l'invention définie à la revendication 2, se déroule de la manière suivante:
a) On introduit les deux parois 21 et 22 d'un coussin, non gonflé, de forme quelconque, par exemple carrée, ronde, présentant plusieurs poches reliées entre-elles, entre les mâchoires 3 et 11 de la machine, comme représenté à la figure 1.
b) Les deux mâchoires 1 et 2 sont déplacées de manière à serrer entre leurs faces terminales 4 et 10 les deux feuilles de plastique constituant les parois du coussin (voir figure 2).
c) L'aiguille 5 de la mâchoire 1 est déplacée longitudinalement perforant les deux parois 21 et 22 en venant se disposer dans la creusure 16 de la mâchoire 2 (voir figure 3)
d) Les deux mâchoires 1 et 2 sont légèrement écartées et un jet d'air sous pression est injecté par les ouvertures latérales 14 de l'aiguille 5 de manière à décoller les deux films 21 et 22 constituant les parois du coussin (voir figure 4)
e) Les deux mâchoires sont resserrées, puis le dispositif d'aspiration est activé dans les canaux 6 et 7, disposés en couronnes autour d'ouvertures permettant le passage de l'aiguille, et maintiennent collées les deux parois 21 et 22 sur les extrémités des cylindres 3 et 11. L'air sous pression est injecté dans le coussin par les ouvertures 14 gonflant ce dernier (voir figures 5 et 6)
f) Les mâchoires 1 et 2 sont rapprochées serrant les deux parois 21 et 22 entre elles en comprimant l'air contenu dans le coussin (voir figure 7)
g) Le cylindre 17 contenu dans le corps 11 de la mâchoire 2 est déplacé de manière à venir s'appuyer sur le pourtour de l'orifice de sortie de l'aiguille 5 du corps 3. L'élément chauffant 18 est activé thermo soudant les deux parois le long d'une couronne entourant le trou de l'aiguille 5 empêchant l'air de ressortir du coussin (voir figure 8)

Comme on peut facilement le voir sur la figure 8 la surface de contact entre les deux mâchoires 1 et 2 est plus grande que la zone thermo soudée, il s'ensuit que lorsque les mâchoires seront écartées pour libérer le coussin de la machine la zone 23 représente une couronne où les deux parois ne sont pas collées, et s'écarteront l'une de l'autre provocant ainsi une diminution de la pression dans le coussin.

Afin de remédier à ce défaut il a été prévu dans une autre forme d'exécution de l'utilisation de la machine de prévoir des coussins présentant au moins un endroit où les deux parois sont en partie thermo soudées définissant un espace en communication avec le reste du volume compris entre les deux parois. Comme on le voit sur la figure 10 cet espace est circulaire défini par des soudures en arc de cercle. Mais cet espace pourrait avoir une autre forme, par exemple polygonale carrée, triangulaire, la seule condition et que la ligne de soudure ne soit pas continue de manière à rester en communication avec le reste du volume compris entre les deux parois.

Sur la figure 9, on voit les deux mâchoires écartées libérant un coussin de la machine gonflé selon la dernière utilisation décrite ci-dessus. On constate que la zone thermo soudée 27 où les deux parois sont soudées comporte sur son pourtour un zone en forme de tore 28 présentant des zones 25, 29 sur la figure 10 où les deux parois sont soudées, les zones 25, respectivement 29 (voir figure 10) ne sont pas continues , donc l'intérieure du tore est à la même pression que l'intérieur 26 du coussin. En d'autres termes les deux parois dans la zone de soudage ne peuvent que très légèrement s'écarter, ce qui entraine qu'une très faible perte de pression dans le coussin.

Dans une autre forme d'exécution de l'utilisation d'une machine selon l'invention, on utilise des coussins constitués de deux parois (films de plastique) définissant un espace fermé emprisonnant une faible quantité d'air évitant le collage des deux parois. Cette dernière opération ayant été réalisée au préalable avant d'entrer dans la machine selon l'invention, par exemple sur une autre machine, connue de l'homme du métier. L'utilisation se déroule de la manière suivante:
A) On place les deux parois d'un coussin présentant deux parois non collées entre elles.
B) Les deux mâchoires sont déplacées de manière à serrer entre leurs faces terminales les deux feuilles de plastique constituant les parois du coussin.
C) Le dispositif d'aspiration est activé dans les canaux disposés en couronnes sur les faces terminales des deux corps constituant les mâchoires. Les deux parois sont alors maintenues écartées collées contre lesdites faces.
D) Une aiguille contenue dans le corps de la mâchoire présentant une ouverture à sa pointe et déplacée de manière à ne percer que la première paroi en laissant l'autre intacte.
E) L'air sous pression est injecté dans le coussin gonflant ce dernier.
F) Les mâchoires sont rapprochées serrant les deux parois entre elles en comprimant l'air contenu dans le coussin.
G) De la même manière que dans l'utilisation précédemment décrite. Le cylindre 17 contenu dans le corps 11 de la mâchoire 2 est déplacé de manière à venir s'appuyer sur le pourtour de l'orifice de sortie de l'aiguille 5 du corps 3. L'élément chauffant est activé thermo soudant les deux parois le long d'une couronne entourant le trou de l'aiguille empêchant l'air de ressortir du coussin. Et l'utilisation (procédé) se termine comme celle précédemment décrite en regard de la figure 9.

Dans encore une autre forme d'exécution d'une machine selon de l'invention pour gonfler des coussins, auxquels on a déjà fait un trou dans au moins une des parois. L'utilisation se déroulera de la manière suivante:
A) On place les deux parois d'un coussin entre les mâchoires de manière que le trou soit disposé en face de l'orifice de sortie de l'aiguille dans la face d'un des corps.
B) Le dispositif de succion est actionné, les deux mâchoires sont écartées maintenant chacune une des parois collées contre elles.
D) Le gaz sous pression est alors injecté dans le coussin par l'orifice de sortie de l'aiguille prévu dans la face terminale d'une des mâchoires, sans que l'aiguille ne soit déplacée.

Le reste du processus se déroule ensuite comme décrit précédemment.

Il est encore possible de concevoir des variantes d'utilisation dans lesquelles le coussin est percé dans n'importe quel endroit, par exemple dans un angle, ou dans lesquelles le coussin présente une protubérance 36 (voir figure 11) relativement à sa forme générale, l'intérieure 34 de ladite protubérance étant relié à son volume général 36 dudit coussin par un conduit 33 qui sera fermé par thermo soudage 37. Comme on peut le voir sur la figure 11, une protubérance 36 est attachée au volume général 32 d'un coussin par un conduit 33, les deux films constituant le coussin étant soudés le long de la ligne 35

Comme on peut le constater toutes les opérations décrites ci-dessus ne nécessitent pas l'intervention humaine. De plus, il est possible d'assurer un gonflage des cousins à une pression plus élevée que par les méthodes connues à ce jour. Enfin, le perçage peut se faire à n'importe quel endroit sur le coussin, par exemple dans un angle, au milieu, dans un bord, et il est possible de gonfler n'importe quelle forme de coussin, même présentant plusieurs poches communiquant entre-elles. Les coussins obtenus par un procédé selon l'invention sont plus gonflés donc plus rigides et peuvent dans certains cas remplacer les coques en polystyrène. La pression de gonflage peut varier en fonction de la résistance et de l'épaisseur des feuilles constituant les parois.

## Revendications

1. Machine de gonflage automatique de coussins de gaz, notamment d'air, coussins comportant deux parois (21, 22) en matière plastique liées entre elles sur leur pourtour, qui définissent ainsi un espace fermé, **caractérisée en ce qu'**elle comporte une source de gaz sous pression, deux mâchoires (1, 2) disposées mobiles sur un bâti, chacune desdites mâchoires étant constituées d'un corps (1, 3) présentant chacun une face plane (4, 10) sensiblement de même forme et de même surface, lesdites faces pouvant venir l'une contre l'autre de manière à serrer entre elles les parois d'un coussin, chaque mâchoire comportant des moyens de succion (6, 7) débouchant sur sa face plane, une première mâchoire présentant à l'intérieur de son corps une aiguille creuse (5) mobile relativement au corps et pouvant dans une certaine position avoir sa pointe à l'extérieur de la surface de la face plane, une seconde mâchoire présentant à l'intérieure de son corps un élément chauffant (18) pouvant lorsque les deux mâchoires serrent entre elles les deux parois d'un coussin thermo-souder les deux parois ensembles sur une certaine partie de leur surface de contact.

2. Machine selon la revendication 1, **caractérisée en ce que** l'aiguille creuse est obturée à sa pointe et présente au moins une ouverture latérale proche de sa pointe, et est reliée à son autre extrémité à la source de gaz sous pression, que la face du corps comportant l'élément chauffant présente une creusure destinée à recevoir la pointe de l'aiguille lorsque les deux mâchoires sont serrées, que le pourtour de la creusure constitue un appui pour l'élément chauffant de manière à faire une soudure entourant l'aiguille.

3. Machine selon la revendication 1, **caractérisée en ce que** l'aiguille creuse est ouverte à sa pointe.

4. Machine selon la revendication 1, **caractérisée en ce que** l'élément chauffant est constitué de manière à thermo souder les deux parois d'un coussin selon une ligne droite

5. Utilisation d'une machine selon la revendication 2, pour gonfler des coussins, **caractérisée en ce que** l'on place les deux parois d'un coussin entre les mâchoires de la machine, une fois ledit coussin serré entre les deux mâchoires l'aiguille est déplacée de manière à percer les deux parois, plaçant ladite ouverture latérale entre les parois, on injecte alors du gaz sous pression de manière à séparer les deux parois, les deux mâchoires sont resserrées, puis le dispositif de succion est actionné, les deux mâchoires sont ensuite écartées en maintenant chacune une des parois collées contre elles, le gaz sous pression est alors injecté dans le coussin par l'ouverture latérale de l'aiguille dont la pointe est bouchée, enfin les deux mâchoires sont rapprochées serrant entre elles une certaine surface de contact des deux parois, l'élément chauffant est actionnés et les deux parois sont thermo-soudées ensembles maintenant le coussin gonflé lors de sa libération des mâchoires.

6. Utilisation d'une machine selon la revendication 5 pour gonfler des coussins comportant au moins un endroit où les deux parois sont soudées définissant un espace en communication avec le reste du volume compris entre les deux parois, **caractérisée en ce que** l'on place ledit endroit entre les mâchoires de la machine.une fois ledit coussin serré entre les deux mâchoires l'aiguille est déplacée de manière à percer les deux parois dans ledit endroit, les deux mâchoires sont resserrées, puis on injecte du gaz sous pression de manière à séparer les deux parois et le dispositif de succion est actionné, les deux mâchoires sont alors écartées maintenant chacune une des parois collées contre elles, le gaz sous pression est alors injecté dans le coussin par l'ouverture latérale de l'aiguille dont la pointe est bouchée, enfin les deux mâchoires sont rapprochées serrant entre elles une certaine surface des deux parois, l'élément chauffant est actionnés et les deux parois sont thermo-soudées ensembles maintenant le coussin gonflé, ensuite les deux mâchoires sont écartées libérant le coussin gonflé, ledit endroit empêchant les deux parois de s'écarter de manière à pas diminuer la pression dans le coussin lors de sa libération des mâchoires.

7. Utilisation d'une machine selon la revendication 3 pour gonfler des coussins comportant deux parois liées entre-elles par pliages et/ou soudures, définissant un espace fermé, ledit espace comportant un certaine quantité de gaz séparant lesdites parois, **caractérisée en ce que** l'on place les deux parois d'un coussin entre les mâchoires de la machine, une fois ledit coussin serré entre les deux mâchoires le dispositif de succion est actionné et les deux mâchoires sont écartées maintenant chacune une des parois collées contre elles, ensuite l'aiguille est déplacée de manière à percer une des parois, le gaz sous pression est alors injecté dans le coussin par un ouverture prévue à l'extrémité de l'aiguille, enfin les deux mâchoires sont rapprochées serrant entre elles une certaine surface des deux parois, l'élément chauffant est actionné et les deux parois sont thermo-soudées ensembles maintenant le coussin gonflé.

8. Utilisation d'une machine selon la revendication 4, pour gonfler des coussins de forme polygonale, par exemple carrée, **caractérisée en ce que** l'on place un angle d'un coussin entre les mâchoires de la machine, une fois ledit coussin serré entre les deux mâchoires l'aiguille est déplacée de manière à percer les deux parois, puis le dispositif de succion est actionné et les deux mâchoires sont écartées maintenant chacune une des parois collées contre elles, le gaz sous pression est alors injecté dans le coussin par l'ouverture latérale prévue sur l'aiguille dont la pointe est bouchée, enfin les deux mâchoires sont rapprochées serrant entre elles une certaine surface des deux parois comprises dans l'angle, l'élément chauffant est actionnés et thermo-soude les deux parois le long d'une ligne reliant deux côté de l'angle dudit polygone, créant un triangle maintenant le coussin gonflé.

9. Utilisation d'une machine selon la revendication 1, pour gonfler des coussins présentant un trou dans l'une des parois, **caractérisée en ce que** l'on place les deux parois d'un coussin entre les mâchoires de manière que le trou préalablement aménagé soit disposé en face de l'orifice de sortie de l'aiguille dans la face d'un des corps, le dispositif de succion est actionné, les deux mâchoires sont écartées maintenant chacune une des parois collées contre elles, le gaz sous pression est alors injecté dans le coussin par un ouverture latérale prévue sur l'aiguille ou directement par ledit orifice de sortie de cette dernière de la face dudit corps, enfin les deux mâchoires sont rapprochées serrant entre elles une certaine surface des deux parois, l'élément chauffant est actionnés et les deux parois sont thermo- soudées ensembles maintenant le coussin gonflé.

10. Utilisation d'une machine selon la revendication 4 pour gonfler des coussins de forme polygonale présentant une protubérance (36) reliée au reste du coussin par un conduit (33), caractérisée en ce l'on place ladite protubérance entre les mâchoires de la machine, une fois ladite protubérance du coussin serrée entre les deux mâchoires, l'aiguille est déplacée de manière à percer les deux parois, plaçant ladite ouverture latérale entre les parois de ladite protubérance, on injecte alors du gaz sous pression de manière à séparer les deux parois, les deux mâchoires sont resserrées, puis le dispositif de succion est actionné, les deux mâchoires sont ensuite écartées en maintenant chacune une des parois collées contre elles, le gaz sous pression est alors injecté dans le coussin par l'ouverture latérale de l'aiguille dont la pointe est bouchée, enfin les deux mâchoires sont rapprochées serrant entre elles une certaine surface de contact des deux parois de la protubérance, l'élément chauffant est actionnés et les deux parois sont thermo soudées ensembles le long d'une ligne fermant ledit conduit maintenant le coussin gonflé lors de sa libération des mâchoires.

## Patentansprüche

1. Maschine zum automatischen Aufblasen von Gaskissen, insbesondere Luftkissen, die zwei an ihrem Umfang miteinander verbundene Wände (21, 22) aus Kunststoff aufweisen, welche auf diese Weise einen geschlossenen Raum definieren, **dadurch gekennzeichnet, dass** sie eine Druckgasquelle und zwei beweglich auf einem Gestell angeordnete Klemmbacken (1, 2) aufweist, wobei jede der Klemmbacken von einem Körper (1, 3) gebildet wird, der jeweils eine ebene Stirnseite (4, 10) im Wesentlichen mit derselben Form und derselben Oberfläche aufweist, wobei sich diese Stirnseiten aufeinander zubewegen können, derart, dass sie die Wände eines Kissens zwischen sich festklemmen, wobei jede Klemmbacke Saugmittel (6, 7) aufweist, die auf ihrer ebenen Stirnseite münden, wobei eine erste Klemmbacke im Inneren ihres Körpers eine hohle Nadel (5) aufweist, die bezüglich des Körpers beweglich ist und in einer gewissen Position ihre Spitze außerhalb der Oberfläche der ebenen Stirnseite aufweisen kann, wobei eine zweite Klemmbacke im Inneren ihres Körpers ein Heizelement (18) aufweist, das, wenn die zwei Klemmbacken die zwei Wände eines Kissens zwischen sich festklemmen, die zwei Wände auf einem gewissen Teil ihrer Kontaktfläche miteinander warmverschweißen kann.

2. Maschine nach Anspruch 1, **dadurch gekennzeichnet, dass** die hohle Nadel an ihrer Spitze verschlossen ist und in der Nähe ihrer Spitze mindestens eine seitliche Öffnung aufweist und an ihrem anderen Ende mit der Druckgasquelle verbunden ist, dass die Stirnseite des das Heizelement aufweisenden Körpers eine Aushöhlung aufweist, die dazu bestimmt ist, die Spitze der Nadel aufzunehmen, wenn die zwei Klemmbacken gespannt werden, und dass der Umfangsrand der Aushöhlung eine Abstützung für das Heizelement bildet, derart, dass eine die Nadel umgebende Schweißverbindung hergestellt wird.

3. Maschine nach Anspruch 1, **dadurch gekennzeichnet, dass** die hohle Nadel an ihrer Spitze offen ist.

4. Maschine nach Anspruch 1, **dadurch gekennzeichnet, dass** das Heizelement dafür ausgelegt ist, die zwei Wände eines Kissens entlang einer Geraden warmzuverschweißen.

5. Verwendung einer Maschine nach Anspruch 2 zum Aufblasen von Kissen, **dadurch gekennzeichnet, dass** die zwei Wände eines Kissens zwischen den Klemmbacken der Maschine angeordnet werden, dass, sobald das Kissen zwischen den zwei Klemmbacken festgeklemmt ist, die Nadel derart verschoben wird, dass sie die zwei Wände durchbohrt, wobei die seitliche Öffnung zwischen den Wänden angeordnet wird, wonach Druckgas eingespritzt wird, derart, dass die zwei Wände voneinander getrennt werden, dass die zwei Klemmbacken nachgespannt werden, danach die Saugvorrichtung aktiviert wird, die zwei Klemmbacken anschließend voneinander entfernt werden, wobei sie jeweils eine der Wände an ihnen anliegend halten, wonach das Druckgas durch die seitliche Öffnung der Nadel, deren Spitze verschlossen ist, in das Kissen eingespritzt wird, schließlich die zwei Klemmbacken wieder einander genähert werden, wobei sie eine gewisse Kontaktfläche der zwei Wände zwischen sich festklemmen, das Heizelement aktiviert wird und die zwei Wände miteinander warmverschweißt werden, wobei das Kissen bei seiner Freigabe aus den Klemmbacken aufgeblasen gehalten wird.

6. Verwendung einer Maschine nach Anspruch 5 zum Aufblasen von Kissen, die mindestens eine Stelle aufweisen, wo die zwei Wände verschweißt sind und dabei einen Raum definieren, der mit dem Rest des zwischen den zwei Wänden enthaltenen Volumens in Kommunikation steht, **dadurch gekennzeichnet, dass** diese Stelle zwischen den Klemmbacken der Maschine angeordnet wird, dass, sobald das Kissen zwischen den zwei Klemmbacken festgeklemmt ist, die Nadel derart verschoben wird, dass sie die zwei Wände an dieser Stelle durchbohrt, dass die zwei Klemmbacken nachgespannt werden, wonach Druckgas eingespritzt wird, derart, dass die zwei Wände voneinander getrennt werden, und die Saugvorrichtung aktiviert wird, die zwei Klemmbacken dann voneinander entfernt werden, wobei sie jeweils eine der Wände an ihnen anliegend halten, wonach das Druckgas durch die seitliche Öffnung der Nadel, deren Spitze verschlossen ist, in das Kissen eingespritzt wird, schließlich die zwei Klemmbacken wieder einander genähert werden, wobei sie eine gewisse Fläche der zwei Wände zwischen sich festklemmen, das Heizelement aktiviert wird und die zwei Wände miteinander warmverschweißt werden, wobei das Kissen aufgeblasen gehalten wird, anschließend die zwei Klemmbacken voneinander entfernt werden, wobei sie das aufgeblasene Kissen freigeben, wobei die Stelle verhindert, dass sich die zwei Wände voneinander entfernen, so dass sich der Druck in dem Kissen bei dessen Freigabe durch die Klemmbacken nicht verringert.

7. Verwendung einer Maschine nach Anspruch 3 zum Aufblasen von Kissen, die zwei durch Faltungen und/oder Schweißverbindungen miteinander verbundene Wände aufweisen, die einen geschlossenen Raum definieren, wobei dieser Raum eine gewisse Menge an Gas enthält, welche die Wände trennt, **dadurch gekennzeichnet, dass** die zwei Wände eines Kissens zwischen den Klemmbacken der Maschine angeordnet werden, dass, sobald das Kissen zwischen den zwei Klemmbacken festgeklemmt ist, die Saugvorrichtung aktiviert wird und die zwei Klemmbacken voneinander entfernt werden, wobei sie jeweils eine der Wände an ihnen anliegend halten, danach die Nadel derart verschoben wird, dass sie eine der Wände durchbohrt, wonach das Druckgas durch eine am Ende der Nadel vorgesehene Öffnung in das Kissen eingespritzt wird, schließlich die zwei Klemmbacken wieder einander genähert werden, wobei sie eine gewisse Fläche der zwei Wände zwischen sich festklemmen, das Heizelement aktiviert wird und die zwei Wände miteinander warmverschweißt werden, wobei das Kissen aufgeblasen gehalten wird.

8. Verwendung einer Maschine nach Anspruch 4 zum Aufblasen von Kissen mit polygonaler, zum Beispiel quadratischer Form, **dadurch gekennzeichnet, dass** eine Ecke eines Kissens zwischen den Klemmbacken der Maschine angeordnet wird, dass, sobald das Kissen zwischen den zwei Klemmbacken festgeklemmt ist, die Nadel derart verschoben wird, dass sie die zwei Wände durchbohrt, danach die Saugvorrichtung aktiviert wird und die zwei Klemmbacken voneinander entfernt werden, wobei sie jeweils eine der Wände an ihnen anliegend halten, wonach das Druckgas durch die seitliche Öffnung, die in der Nadel vorgesehen ist, deren Spitze verschlossen ist, in das Kissen eingespritzt wird, schließlich die zwei Klemmbacken wieder einander genähert werden, wobei sie eine gewisse Fläche der zwei in der Ecke befindlichen Wände zwischen sich festklemmen, das Heizelement aktiviert wird und die zwei Wände entlang einer Linie warmverschweißt, die zwei Seiten der Ecke des Polygons verbindet, wobei ein Dreieck erzeugt wird, welches das Kissen aufgeblasen hält.

9. Verwendung einer Maschine nach Anspruch 1 zum Aufblasen von Kissen, die ein Loch in einer der Wände aufweisen, **dadurch gekennzeichnet, dass** die zwei Wände eines Kissens derart zwischen den Klemmbacken angeordnet werden, dass das zuvor hergestellte Loch gegenüber der Austrittsöffnung der Nadel in der Stirnseite eines der Körper angeordnet ist, dass die Saugvorrichtung aktiviert wird, die zwei Klemmbacken voneinander entfernt werden, wobei sie jeweils eine der Wände an ihnen anliegend halten, wonach das Druckgas durch eine an der Nadel vorgesehene seitliche Öffnung oder direkt durch die Austrittsöffnung dieser Letzteren in der Stirnseite des Körpers in das Kissen eingespritzt wird, schließlich die zwei Klemmbacken wieder einander genähert werden, wobei sie eine gewisse Oberfläche der zwei Wände zwischen sich festklemmen, das Heizelement aktiviert wird und die zwei Wände miteinander warmverschweißt werden, wobei das Kissen aufgeblasen gehalten wird.

10. Verwendung einer Maschine nach Anspruch 4 zum Aufblasen von Kissen mit polygonaler Form, die eine Ausstülpung (36) aufweisen, die mit dem Rest des Kissens durch einen Kanal (33) verbunden ist, **dadurch gekennzeichnet, dass** die Ausstülpung zwischen den Klemmbacken der Maschine angeordnet wird, dass, sobald die Ausstülpung des Kissens zwischen den zwei Klemmbacken festgeklemmt ist, die Nadel derart verschoben wird, dass sie die zwei Wände durchbohrt, wobei die seitliche Öffnung zwischen den Wänden der Ausstülpung angeordnet wird, wonach Druckgas eingespritzt wird, derart, dass die zwei Wände voneinander getrennt werden, dass die zwei Klemmbacken nachgespannt werden, danach die Saugvorrichtung aktiviert wird, die zwei Klemmbacken anschließend voneinander entfernt werden, wobei sie jeweils eine der Wände an ihnen anliegend halten, wonach das Druckgas durch die seitliche Öffnung der Nadel, deren Spitze verschlossen ist, in das Kissen eingespritzt wird, schließlich die zwei Klemmbacken wieder einander genähert werden, wobei sie eine gewisse Kontaktfläche der zwei Wände der Ausstülpung zwischen sich festklemmen, das Heizelement aktiviert wird und die zwei Wände miteinander entlang einer Linie warmverschweißt werden, welche den Kanal verschließt, wobei das Kissen bei seiner Freigabe aus den Klemmbacken aufgeblasen gehalten wird.

## Claims

1. A machine for automatically inflating gas cushions, notably air cushions, the cushions comprising two walls (21, 22) made of plastic linked together on their periphery, which thus define a closed space, **characterized in that** it comprises a source of pressurized gas, two jaws (1,2) placed movably on a frame, each of said jaws consisting of a body (1,3) each having a flat face (4, 10) of substantially the same shape and same surface area, said faces being able to come against one another so as to clamp between them the walls of a cushion, each jaw comprising suction means (6, 7) leading onto its flat face, a first jaw having inside its body a hollow needle (5) that can move relative to the body and being able, in a certain position, to have its point outside the surface of the flat face, a second jaw having, inside its body, a heating element (18) which can, when the two jaws clamp between them the two walls of a cushion, heat-seal the two walls together over a certain portion of their contact surface.

2. The machine as claimed in claim 1, **characterized in that** the hollow needle is closed off at its point and has at least one lateral opening close to its point, and is connected at its other end to the source of pressurized gas, that the face of the body comprising the heating element has a cavity designed to receive the point of the needle when the two jaws are clamped, that the periphery of the cavity forms a bearing surface for the heating element so as to make a weld surrounding the needle.

3. The machine as claimed in claim 1, **characterized in that** the hollow needle is open at its point.

4. The machine as claimed in claim 1, **characterized in that** the heating element is made so as to heat-seal the two walls of a cushion along a straight line.

5. A use of a machine as claimed in claim 2, to inflate cushions, **characterized in that** the two walls of a cushion are placed between the jaws of the machine, once said cushion is clamped between the two jaws, the needle is moved so as to pierce the two walls, placing said lateral opening between the walls, pressurized gas is then injected so as to separate the two walls, the two jaws are reclamped, then the suction device is actuated, the two jaws are then separated while each keeping one of the walls stuck against them, the pressurized gas is then injected into the cushion through the lateral opening of the needle of which the point is closed off, finally the two jaws are brought together clamping between them a certain contact surface of the two walls, the heating element is actuated and the two walls are heat-sealed together keeping the cushion inflated when it is released from the jaws.

6. The use of a machine as claimed in claim 5 to inflate cushions, comprising at least one location where the two walls are welded defining a space in communication with the rest of the volume lying between the two walls, **characterized in that** said location is placed between the jaws of the machine; once said cushion is clamped between the two jaws, the needle is moved so as to pierce the two walls in said location, the two jaws are reclamped, then pressurized gas is injected so as to separate the two walls and the suction device is actuated, the two jaws are then separated each keeping one of the walls stuck against them, the pressurized gas is then injected into the cushion through the lateral opening of the needle of which the point is closed off, finally the two jaws are brought together clamping between them a certain surface area of the two walls, the heating element is actuated and the two walls are heat-sealed together keeping the cushion inflated, then the two jaws are moved away releasing the inflated cushion, said location preventing the two walls from separating so as not to reduce the pressure in the cushion when it is released from the jaws.

7. The use of a machine as claimed in claim 3 to inflate cushions comprising two walls linked together by folds and/or welds, defining a closed space, said space comprising a certain quantity of gas separating said walls, **characterized in that** the two walls of a cushion are placed between the jaws of the machine, once said cushion is clamped between the two jaws the suction device is actuated and the two jaws are separated each keeping one of the walls stuck against them, then the needle is moved so as to pierce one of the walls, the pressurized gas is then injected into the cushion through an opening provided at the end of the needle, finally the two jaws are brought together clamping between them a certain surface area of the two walls, the heating element is actuated and the two walls are heat-sealed together keeping the cushion inflated.

8. The use of a machine as claimed in claim 4 to inflate cushions of polygonal, for example square, shape, **characterized in that** a corner of a cushion is placed between the jaws of the machine, once said cushion is clamped between the two jaws the needle is moved so as to pierce the two walls, then the suction device is actuated and the two jaws are separated each keeping one of the walls stuck against them, the pressurized gas is then injected into the cushion through the lateral opening provided on the needle of which the point is closed off, finally the two jaws are brought together clamping between them a certain surface area of the two walls included in the corner, the heating element is actuated and heat-seals the two walls along a line connecting two sides of the corner of said polygon, creating a triangle keeping the cushion inflated.

9. The use of a machine as claimed in claim 1 to inflate cushions having a hole in one of the walls, **characterized in that** the two walls of a cushion are placed between the jaws so that the hole previously made is placed opposite the outlet orifice of the needle in the face of one of the bodies, the suction device is actuated, the two jaws are separated each keeping one of the walls stuck against them, the pressurized gas is then injected into the cushion through a lateral opening provided on the needle or directly through said outlet orifice of the latter of the face of said body, finally the two jaws are brought together clamping between them a certain surface area of the two walls, the heating element is actuated and the two walls are heat-sealed together keeping the cushion inflated.

10. The use of a machine as claimed in claim 4 to inflate cushions of polygonal shape having a protuberance (36) connected to the rest of the cushion by a duct (33), **characterized in that** said protuberance is placed between the jaws of the machine, once said protuberance of the cushion is clamped between the two jaws, the needle is moved so as to pierce the two walls, placing said lateral opening between the walls of said protuberance, pressurized gas is then injected so as to separate the two walls, the two jaws are reclamped, then the suction device is actuated, the two jaws are then separated while each keeping one of the walls stuck against them, the pressurized gas is then injected into the cushion through the lateral opening of the needle of which the point is closed off, finally the two jaws are brought together clamping between them a certain surface area of contact of the two walls of the protuberance, the heating element is actuated and the two walls are heat-sealed together along a line closing said duct keeping the cushion inflated when it is released from the jaws.
